# EUROPÄISCHE PATENTSCHRIFT

(11) **EP 1 031 471 B1**
(45) Veröffentlichungstag und Bekanntmachung des Hinweises auf die Patenterteilung: **15.12.2004**
(21) Anmeldenummer: 99103726.8
(22) Anmeldetag: 25.02.1999
(51) Int. Cl.: B60R 21/00, G01S 17/87

(54) **Verfahren und Vorrichtung zum Erzeugen eines Positionsbildes eines Strahlung reflektierenden oder Strahlung streuenden Objekts oder Person**
Method and device for creating a position image using reflected or emitted radiation by an object or a person
Procédé ou appareil pour la création d'un image de position utilisant la rayonnement que est réfléchie ou émis par un objet ou une personne

(43) Veröffentlichungstag der Anmeldung: 30.08.2000
(73) Patentinhaber: SIEMENS AKTIENGESELLSCHAFT, 80333 München (DE)
(72) Erfinder: Oestreicher, Ralf, 76870 Kandel (DE); Lichtinger, Harald, 93096 Köfering (DE); Dirmeyer, Josef, 92439 Bodenwöhr (DE); Späth, Werner Dr., 83607 Holzkirchen (DE)

(56) Entgegenhaltungen:
- WO-A-98/49031
- DE-A- 19 637 108
- DE-A- 19 741 393
- US-A- 5 482 314
- US-A- 5 737 083
- US-A- 5 835 613

## Beschreibung

Verfahren und Vorrichtung zum Erzeugen eines Positionsbildes eines Strahlung reflektierenden oder Strahlung streuenden Objekts oder einer Strahlung reflektierenden oder Strahlung streuenden Person

Die Erfindung betrifft ein Verfahren und eine Vorrichtung zum Erzeugen eines Positionsbildes eines Strahlung reflektierenden oder Strahlung streuenden Objekts oder einer Strahlung reflektierenden oder Strahlung streuenden Person.

In vielerlei Anwendungen stellt sich das Problem, die Position eines Objekts zu kennen. Beispielsweise kann bei modernen Airbagsystemen zum Schutz von Fahrzeuginsassen vor den Folgen eines Unfalls der Airbag in unterschiedlicher Weise ausgelöst und aufgeblasen werden, je nachdem, ob sich die zu schützende Person in großer oder kleiner Entfernung von der Airbageinrichtung befindet oder auch je nach dem, ob die Person groß oder klein ist usw..

Bekannt sind optische oder auch mit Ultraschall arbeitende Systeme zur Abstandsmessung (US 5 413 378 A), bei denen die Entfernung eines Objekts mittels mehrerer Abstandsmeßeinrichtungen gemessen wird, die beispielsweise in den Ecken eines Dreiecks angeordnet sind. Durch Ermittlung des Abstandes des Objekts von jeder Ecke des Dreiecks wird eine erhöhte Meßgenauigkeit erzielt; die Systeme sind jedoch sehr aufwendig und haben einen hohen Platzbedarf.

Aus der DE 196 37 108 A1 ist ein Insassenschutzsystem für Kraftfahrzeuge sowie eine Verfahren zur kontinuierlichen Überwachung der Sitzposition des Insassen bekannt, bei der mittels einer Abstandsmesseinrichtung der Abstand zu einem den Insassen sichernden, Strahlen von der Abstandsmesseinrichtung reflektierenden Sicherheitsgurt gemessen wird. Die Abstandsmesseinrichtung weist dabei einen Sender und mehrere Empfänger auf. Der Abstand wird durch Messung der Laufzeit der ausgesandten Strahlen vom Sender zu den Empfängern bestimmt. Da dieses System mehrere Empfänger benötigt, um ein räumliches Positionsbild zu erhalten ist jedoch ein erheblicher und kostenträchtiger Aufwand zu dessen Realisierung nötig.

Der Erfindung liegt die Aufgabe zugrunde, ein in seiner Durchführung einfaches Verfahren und eine in ihrem Aufbau einfache und einen geringen Platzbedarf erfordernde Vorrichtung zum Erzeugen eines Positionsbildes eines Strahlung reflektierenden Objekts oder einer Strahlung reflektierende Person zu schaffen.

Der das Verfahren betreffende Teil der Erfindungsaufgabe wird mit den Merkmalen des Anspruchs 1 gelöst.

Danach besteht das Grundprinzip der Erfindung darin, die Laufzeiten zu messen, die von einer Strahlungsquelle in vorbestimmte, enge Raumwinkelbereiche bzw. Raumwinkel abgestrahlte Strahlungsimpulse benötigen, um von der Strahlungsquelle zu einem Strahlungsempfänger zu gelangen, wobei die Lichtimpulse zunächst von der Strahlungsquelle auf eine von ihrem Raumwinkel abhängige Stelle der Oberfläche des zu messenden Objektes oder der zu messenden Person gelangen, dort reflektiert oder gestreut werden und dann vom Objekt oder der Person zum Strahlungsempfänger gelangen. Aus der Laufzeit der einzelnen Strahlungsimpulse, den bekannten Ortskoordinaten der Strahlungsquelle und des Strahlungsempfängers, der Strahlungsausbreitungsgeschwindigkeit und den vorbestimmten Raumwinkeln, in die die Strahlungsimpuls ausgestrahlt werden, kann die Stelle der Objektoberfläche bestimmt werden, an der der Strahlungsimpuls reflektiert bzw. gestreut wird. Bei ausreichend vielen, in vorbestimmte Raumwinkel abgestrahlten Strahlungsimpulsen kann ein vorzugsweise dreidimensionales Positionsbild des Objekts erhalten werden, dessen Koordinaten relativ zu denen der Strahlungsquelle und des Strahlungsempfängers bekannt sind. Die auf diese Weise bekannte Position des Objekts kann in unterschiedlichsten Anwendungen genutzt werden, beispielsweise zum gezielten Auslösen eines Airbags, eines Gurtstrammers, oder auch zum Erkennen, daß ein Sitz nicht belegt ist, so daß die jeweilige Sicherheitseinrichtung nicht ausgelöst wird, zum Auslösen von Warnsignalen in Ausstellungen, wenn eine Person sich in einem verbotenen Bereich bewegt, ganz allgemein zum Objektschutz, zur Erfassung von Daten bei der Schnellvermessung von Objekten usw..

Als Strahlung kann jedwelche ausreichend bündelbare Strahlung verwendet werden, die von dem Objekt ausreichend reflektiert bzw. gestreut wird, beispielsweise Radarwellen, Infrarotstrahlung usw..

Mit Vorteil ist die Strahlungsquelle gemäß dem Anspruch 2 eine Lichtquelle.

Der Anspruch 3 ist auf eine vorteilhafte Durchführungsform des erfindungsgemäßen Verfahrens gerichtet, bei der ein einziger Strahlungsempfänger verwendet werden kann.

Das erfindungsgemäße Verfahren kann mit jedwelcher Strahlungsquelle arbeiten, die in der Lage ist, Strahlungsimpulse in unterschiedliche Raumwinkel, d.h. fokussierte Strahlungsbündel, die einen kleinen Öffnungswinkel aufweisen und deshalb auf einen kleinen Oberflächenbereich des Objekts auftreffen, abzustrahlen. Der Strahlungsempfänger kann in unmittelbarer Nähe der Strahlungsquelle angeordnet sein, wodurch das Verfahren mit platzsparenden Vorrichtungen durchgeführt werden kann.

Der Anspruch 4 ist auf den grundsätzlichen Aufbau der erfindungsgemäßen Vorrichtung gerichtet.

Die Unteransprüche 5 bis 9 kennzeichnen vorteilhafte Weiterbildungen der erfindungsgemäßen Vorrichtung, wobei gemäß den Ansprüchen 8 und 9 die Vorrichtung für ihre Verwendung in einem Kraftfahrzeug vorteilhaft ist.

Die erfindungsgemäße Vorrichtung ist überall dort besonders vorteilhaft einsetzbar, wo flächige oder räumliche Positions- bzw. Oberflächenkonturbilder mit quantitativer Vermaßung erzeugt werden sollen.

Die Erfindung wird im folgenden anhand schematischer Zeichnungen beispielsweise und mit weiteren Einzelheiten erläutert.

Es stellen dar:
- Fig. 1: den grundsätzlichen Aufbau einer erfindungsgemäßen Vorrichtung mit Blockschaltbild,
- Fig. 2: eine Aufsicht auf eine Vorichtung,
- Fig. 3: bis 5 Querschnitte durch verschiedene Lichtquellen und
- Fig. 6: eine abgeänderte Ausführung einer erfindungsgemäßen Vorrichtung.

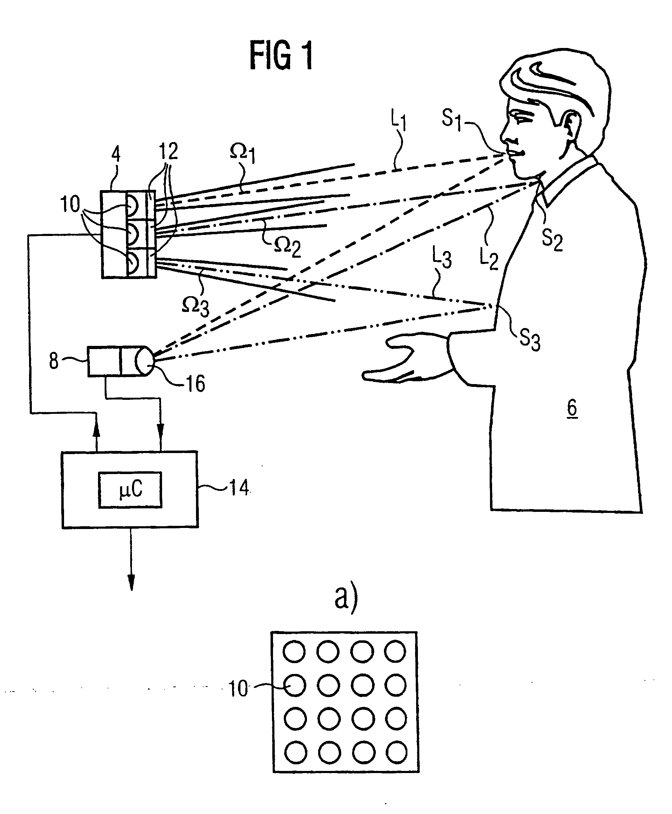

Gemäß Fig. 1 ist eine insgesamt mit 4 bezeichnete Lichtquelle derart ausgebildet, daß mit ihr zu vorbestimmten Zeitpunkten Lichtimpulse L₁, L₂ und L₃ vorbestimmter Dauer in vorbestimmte Raumwinkel Ω₁, Ω₂, Ω₃ abgestrahlt werden. Die Raumwinkel Ω₁, Ω₂ und Ω₃ sind gut definiert, d.h. die Öffnungswinkel der einzelnen Lichtimpulse sind klein, so daß von jedem Lichtimpuls bzw. Lichtbündel nur ein kleiner Oberflächenbereich eines Objekts 6, im dargestellten Beispiel eine in einem Fahrzeug sitzende Person getroffen wird. Der Lichtimpuls L₁ gelangt an der Stelle S₁ auf das Objekt 6, wird dort reflektiert bzw. gestreut und gelangt auf einen Lichtempfänger 8. Der Lichtstrahl L₂ gelangt auf die Stelle S₂ des Objekts 6 und von dort auf den Lichtempfänger 8. Der Lichtstrahl L₃ gelangt auf die Stelle S₃ des Objekts und von dort auf den Lichtempfänger 8.

Die Lichtquelle 4 ist beispielsweise durch ein Feld von Laserdioden 10 gebildet (z.B. VCSEL(Vertical Cavity Surface Emitting Laser)), die in Form einer rechtwinkligen Matrix angeordnet sind, wie im Ausschnitt a der Fig. 1 dargestellt, die eine Vorderansicht der Lichtquelle 4 zeigt. Jeder Laserdiode 10 ist ein optisches Element 12 zugeordnet, das das von der jeweiligen Laserdiode 10 abgestrahlte, annähernd parallele Lichtbündel in einen vorbestimmten Raumwinkel ablenkt.

Zur Ansteuerung der Laserdioden 10 dient ein mit einem Mikroprozessor versehenes Steuergerät 14, in dem auch die Auswertung der Ausgangssignale des Lichtempfängers 8, beispielsweise einer einzigen Photodiode, vor der eine Sammellinse 16 angeordnet ist.

Die Funktion der beschriebenen Anordnung ist folgende:

Die Laserdioden 10 der Lichtquelle 4 werden vom Steuergerät 14 in zeitlich vorbestimmter Weise sequentiell derart angesteuert, daß keine Überlappung zwischen den abgestrahlten Lichtimpulsen besteht. Es sei angenommen, der Lichtimpuls L₁ werde als erster abgegeben. Zu dem Zeitpunkt, zu dem der Lichtimpuls Ei- aufleuchtet, beginnt im Steuergerät 14 ein Zähler zu laufen, der angehalten wird, sobald der von dem Objekt 6 reflektierte Teil des Lichtstrahls L₁ auf den Lichtempfänger 8 gelangt. Die Zeitdauer, die der Lichtimpuls L₁ von seinem Aussenden bis zum Auftreffen auf den Lichtempfänger 8 benötigt, ist somit bekannt. Da die Lichtgeschwindigkeit bekannt ist, ist die Weglänge bekannt, die der Lichtimpuls L₁ von der Lichtquelle 4 bis zum Lichtempfänger 8 zurücklegt. Da der Raumwinkel Ω₁ und die Positionen der Lichtquelle 4 und des Lichtempfängers 8 bekannt sind, kann die Position der Stelle S₁ durch einfache geometrische Beziehungen berechnet werden. Es versteht sich, daß, wenn der Lichtempfänger 8 sehr nahe an der Lichtquelle 4 ist, der Abstand von S₁ zur Lichtquelle 4 bzw. zum Lichtempfänger 8 etwa die halbe Weglänge des Lichtstrahls L₁ ist.

Der Lichtstrahl L₂ wird, vom Steuergerät 14 gesteuert, gesendet, wenn der Lichtstrahl L₁ beendet ist, wobei zwischen beiden ein geringer zeitlicher Versatz liegt, der sicherstellt, daß der Lichtstrahl L₂ nicht bereits auf den Lichtempfänger 8 auftrifft, wenn dieser noch vom Lichtstrahl L₁ beendet wird. Wie anhand des Lichtstrahls L₁ geschildert, kann aus der Laufzeit des Lichtstrahls L₂ des Stelle S₂ berechnet werden.

Ähnlich wird dann mit Hilfe des Lichtstrahls L₃ die Position der Stelle S₃ berechnet.

Insgesamt ergibt sich durch Auswerten jedes Lichtstrahls ein Muster von Objektoberflächenstellen Sₙ aus denen ein dreidimensionales Oberflächenbild bzw. Positionsbild des Objekts 6 mit Hilfe des Mikroprozessors des Steuergeräts 14 berechnet werden kann. Aus der Lage des ermittelten dreidimensionalen Positionsbildes wird mit Hilfe von im Steuergerät 14 abgelegten Algorithmen ein Ausgangssignal bzw. eine Information erzeugt, die beispielsweise zur zweckentsprechenden Steuerung der Auslösung eines nicht dargestellten Airbags verwendet wird.

Es versteht sich, daß die Laserdioden 10 und die ihnen zugeordneten optischen Elemente 12 derart ausgebildet und angeordnet sind, daß möglichst wenig Licht des abgestrahlten Lichtimpulses direkt, d.h. ohne Reflexion an dem Objekt 6, auf den Lichtempfänger 8 gerät.

Die Anordnung kann in vielfältiger Weise abgeändert werden; beispielsweise können anstelle von Laserdioden andere lichtemittierenden Dioden oder Lichtquellenelemente verwendet werden. Die Lichtquellenelemente können unmittelbar derart ausgebildet sein, daß sie annähernd parallele Lichtbündel abstrahlen, so daß die Raumwinkelbereiche sehr klein bzw. die Raumwinkel genau definiert sind. Die Auswertung der Signale des Lichtempfängers 8 muß nicht unmittelbar im Steuergerät 14 erfolgen, sondern kann in einem zentralen Steuergerät mit größerer Rechner- und Speicherkapazität folgen.

Die erfindungsgemäße Vorrichtung kann durch das zeitlich sequntielle Ansteuern der Lichtquellenelemente insbesondere mit nur einem einzigen Lichtempfängerelement aufwandsarm betrieben werden.

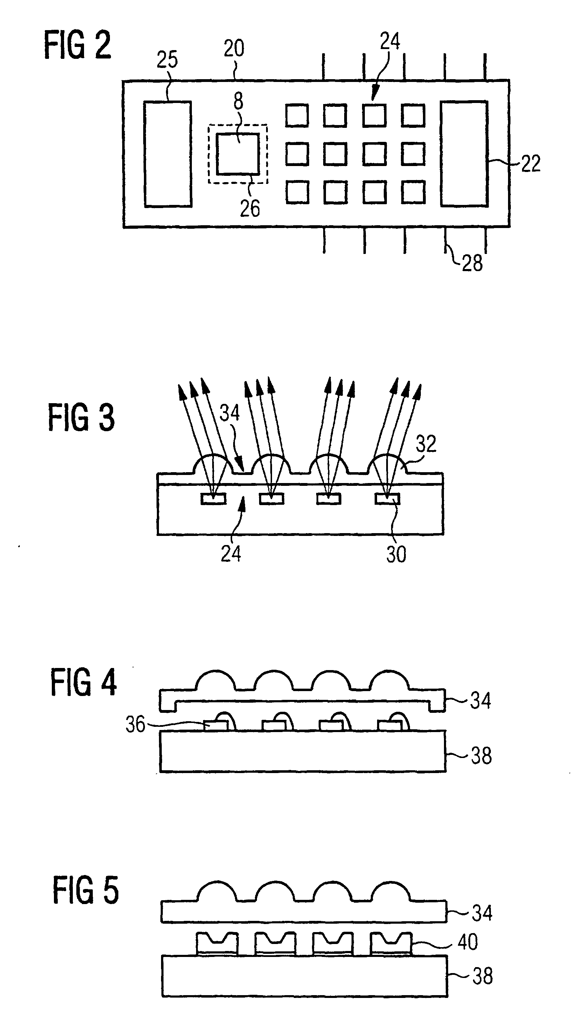

Fig. 2 zeigt eine Aufsicht auf eine erfindungsgemäße Vorrichtung.

In einem Gehäuse 20 ist eine Treiberschaltung 22 zum Betreiben eines VCSEL-Arrays 24 angeordnet. Weiter enthält das Gehäuse den Lichtempfänger 8, der beispielsweise als PIN-Diode ausgebildet, ist und eine Verstärkerschaltung 25 zum Verstärken der Ausgangssignale des Lichtempfängers 8. Über dem Lichtempfänger 8 befindet sich ein optisches Filter 26, beispielsweise ein GaAs-Filter.

Die genannten Bauelemente sind beispielsweise auf ein Leadframe aufgebracht, das mit dem Gehäuse vergossen ist. Anschlußstifte 28 dienen zur elektrischen Kontaktierung.

Es versteht sich, daß je nach Platzverhältnissen die gesamte Steuer- und Auswerteschaltung in das Gehäuse 20 integriert sein kann.

Typischerweise arbeiten die Laser des Arrays 24 mit einer Wellenlänger größer 900 nm. Die Dauer eines Lichtimpulses, der sequentiell von einem der Elemente des Arrays 24 abgestrahlt wird, liegt beispielsweise bei 1 ns; die Taktfrequenz liegt beispielsweise bei 1 kHz, d.h. der zeitliche Abstand des sequentiellen Ansteuerns zweier Laser beträgt dann 1 ms.

Das optische Filter 26 ist vorteilhafterweise so ausgelegt, daß es für die vom Array 24 abgestrahlte Wellenlänge durchlässig ist, jedoch kleinere Wellenlängen blockiert, so daß Fremdlicht oder Sonnenlicht unwirksam ist. Die Pulsleistung eines einzelnen Lichtimpulses liegt beispielsweise bei 1 Watt.

Vorteilhafterweise wird die Vorrichtung über die nicht dargestellte Steuerschaltung so gesteuert, daß jeweils ein Startsignal für die Laufzeitmessung durch das beim Auslösen eines Lichtimpulses auf den Lichtempfänger 8 fallende Streulicht getriggert wird und ein Stoppsignal durch das Licht getriggert wird, was durch Reflexion von dem zu messenden Objekt auf den Lichtempfänger 8 gelangt.

Fig. 3 zeigt schematisch einen Schnitt durch ein Array 24 mit zugehöriger Optik. Im dargestellten Beispiel sind die einzelnen Elemente des Arrays 24 beispielsweise als lichtemittierenden Dioden 30 ausgebildet. Jeder Diode 30 ist ein Linsenelement 32 derart zugeordnet, daß das von jeder LED 30 ausgehende, etwas divergente Lichtbündel als im wesentlichen paralleles Lichtbündel in einen vorbestimmten Raumwinkel abgestrahlt wird. Die Linsenelemente 32 sind vorteilhafterweise zu einem Linsen-Array 34 zusammengegossen, das auf das Gehäuse, das die LED's 30 aufnimmt, angebracht wird, z.B. mit dem Gehäuse vergossen wird, damit verklebt wird oder sonstwie befestigt wird.

Die gesamte Anordnung kann in einfacher Weise an unterschiedlichste Anwendungsfälle angepaßt werden, indem lediglich das Linsen-Array 34 ausgewechselt wird, so daß der beleuchtete Raumwinkelbereich an die jeweiligen Erfordernisse angepaßt ist.

Die Vorrichtung kann auch derart ausgebildet sein, daß jedes einzelne Lichtelement, beispielsweise jede einzelne LED 30 oder jeder einzelne Laser eines Laser-Arrays integral mit einem eigenen Linsenelement ausgebildet wird und die so hergestellten Lichtquellenelemente in vorbestimmter Weise angeordnet werden.

Die Linsenelemente bzw. Mikrolinsen dienen jeweils der Formung des abgestrahlten Lichtbündels und, je nach dem, ob die Körper der Lichtquellenelemente in die vorbestimmten Raumwinkel ausgerichtet werden oder nicht, der Bestimmung der Richtung, in die die Lichtbündel abgestrahlt werden.

Fig. 4 zeigt ein Array aus Einzellasern 36, die durch Bonden mit einem Leadframe 38 verbunden sind. Das Linsen-Array 34 ist wiederum als ein integrales Kunststoffteil ausgebildet.

Bei der Ausführungsform gemäß Fig. 5 sind die einzelnen Lichtquellenelemente des Arrays durch TOP LED 40 gebildet, die mit dem Leadframe 38 beispielsweise in SMD-Technik verbunden sind.

Die dargestellten Ausführungsformen sind lediglich beispielhaft und können in vielfältiger Weise abgeändert werden. Das Lichtelement-Array kann monolitisch ausgebildet sein oder in Form diskreter Elemente aus einzelnen Chips, die in einem Gehäuse untergebracht sind. Die optischen Elemente können ebenfalls in einem integrierten Array ausgebildet sein oder unmittelbar den Lichtelementen zugeordnet sein. Als Schaltungsträger können Leiterplatten, Leadframes oder auch "Molted Injection Devices" (MID) sowie 3-D-Leiterplatten dienen. Die Schaltungsträger können mit einem Gehäuse in Schnapp- oder Cliptechnik verbunden sein, mit ihm verklebt sein oder zusammengegossen sein. Die Linsenelemente bzw. das Linsen-Array kann unmittelbar als zweite Komponente auf die Grundanordnung aufgespritzt werden.

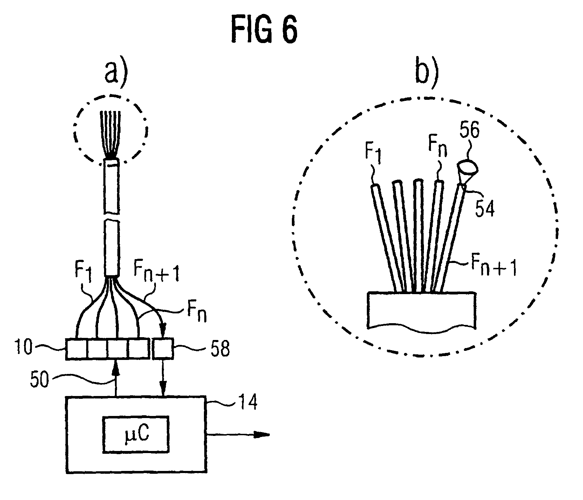

Fig. 6 zeigt eine abgeänderte Ausführungsform einer Vorrichtung.

Das Steuergerät 14 ist über eine Ausgangsleitung 50 mit Laserdioden 10 verbunden, die flächig angeordnet sind, beispielsweise in einem Muster ähnlich dem der Fig. 1a. Jeder Laserdiode 10 ist eine Lichtleiterfaser F₁ bis Fₙ zugeordnet, die einen von der jeweiligen Laserdiode 10 abgestrahlten Lichtimpuls aufnimmt und weiterleitet. Jede Lichtleiterfaser F₁ bis Fₙ endet an ihrem anderen Ende in einer ein Austrittsfenster 52 bildenden Austrittsfläche (siehe Ausschnittsdarstellung b) der Fig. 2), wobei die Enden der einzelnen Lichtleiterfasern F₁ bis Fₙ in vorbestimmte Raumwinkel ausgerichtet sind.

Eine weitere Lichtleiterfaser Fₙ₊₁ dient als Empfängerlichtleiterfaser mit einem Eintrittsfenster 54, vor dem eine Sammellinse 56 angeordnet ist. Die Lichtleiterfaser Fₙ₊₁ leitet Licht zu einem Lichtempfänger 58, dessen Ausgangssignal im Steuergerät 14 ausgewertet wird.

Ein Vorteil der Anordnung gemäß Fig. 2 liegt darin, daß das Steuergerät 14 zusammen mit den Laserdioden 10 und dem Lichtempfänger 58 räumlich entfernt von den Austrittsfenstern 52 und dem Eintrittsfenster 54 angeordnet werden kann, wobei die Verbindung durch das Bündel der Lichtleiterfasern geschieht. Das Lichtleiterfaserbündel kann beispielsweise im Pfosten neben der Windschutzscheibe eines Kraftfahrzeugs oder in der Schalttafel verlegt werden, so daß auch bei beschränkten Platzverhältnissen eine Anwendung des Meßverfahrens möglich ist. Die Signalübertragung ist unempfindlich ggen elektromagnetische Störungen und verursacht selbst keine solchen Strömungen.

Es versteht sich, daß die einzelnen Lichtimpulse nicht zwangsläufig sequentiell abgestrahlt werden müssen. Die einzelnen Laserdioden bzw. Lichtquellenelemente können unterschiedliche Wellenlängen abstrahlen oder sie können in unterschiedlicher Weise moduliert werden, so daß durch entsprechende Auswertung der Lichtempfängersignale die einzelnen Lichtimpulse in zugeordneter Weise erkannt und die Auftreffstellen auf das Objekt berechnet werden können.

## Patentansprüche

1. Verfahren zum Erzeugen eines Positionsbildes eines Strahlung reflektierenden oder Strahlung streuenden Objekts oder einer Strahlung reflektierenden oder Strahlung streuenden Person, bei welchem Verfahren eine Strahlungsquelle (4; 24) Strahlungsimpulse (L₁, L₂, L₃), deren Öffnungswinkel so klein sind, dass von jedem Strahlungsimpuls nur ein kleiner Oberflächenbereich des Objekts oder der Person getroffen wird, in vorbestimmte Raumwinkel (Ω₁, Ω₂, Ω₃) in zeitlich vorbestimmter Weise aussendet, ein ein einziges lichtempfindliches Element aufweisender Strahlungsempfänger (8), der sich in einer vorbestimmten räumlichen Beziehung zu der Strahlungsquelle (4) befindet, die von dem Objekt (6) oder der Person reflektierten oder gestreuten Strahlungsimpulse (L₁, L₂, L₃) empfängt, und eine Recheneinrichtung die Laufzeiten vom Aussenden der einzelnen Strahlungsimpulse (L₁, L₂, L₃) bis zum Auftreffen ihrer von dem Objekt (6) oder der Person reflektierten oder gestreuten Anteile auf den Strahlungsempfänger (8) ermittelt und abhängig von der bekannten räumlichen Zuordnung zwischen Strahlungsquelle (4) und Strahlungsempfänger (8), den Raumwinkeln, in die die jeweiligen Strahlungsimpulse (L₁, L₂, L₃) gesendet werden, und den Laufzeiten das Positionsbild ermittelt.

2. Verfahren nach Anspruch 1, wobei die Strahlungsquelle eine Lichtquelle (4) ist.

3. Verfahren nach Anspruch 1 oder 2, wobei die Strahlungsimpulse (L₁, L₂, L₃) sequentiell derart ausgesendet werden, daß der Empfang des reflektierten oder gestreuten Teils eines Strahlungsimpulses beendet ist bevor der Empfang des reflektierten oder gestreuten Teils des nachfolgenden Strahlungsimpulses beginnt.

4. Vorrichtung zum Erzeugen eines Positionsbildes eines Strahlung reflektierenden oder Strahlung streuenden Objekts (6) oder einer Strahlung reflektierenden oder Strahlung streuenden Person, enthaltend
eine Strahlungsquelle (4) zum Aussenden von Strahlungsimpulsen (L₁, L₂, L₃), deren Öffnungswinkel so klein sind, dass von jedem Strahlungsimpuls nur ein kleiner Oberflächenbereich des Objekts oder der Person getroffen wird, in vorbestimmte Raumwinkel (Ω₁, Ω₂, Ω₃),
einen in vorbestimmter räumlicher Beziehung zu der Strahlungsquelle (4) angeordneten, ein einziges lichtempfindliches Element aufweisenden Strahlungsempfänger (8) zum Empfangen der von dem Objekt oder der Person reflektierten oder gestreuten Teile der Strahlungsimpulse,
eine Steuer- und Auswerteeinrichtung (14), die die Strahlungsquelle (4) derart steuert, daß die Laufzeiten der einzelnen Strahlungsimpulse von deren Aussenden bis zum Empfang ermittelbar sind, und die abhängig von den Positionen der Strahlungsquelle (4) und des Strahlungsempfängers (8), den Raumwinkeln, in die die jeweiligen Strahlungsimpulse gesendet werden, und den Laufzeiten das Positionsbild berechnet.

5. Vorrichtung nach Anspruch 4, wobei die Strahlungsquelle (4; 24) durch eine Anordnung von lichtemittierenden Elementen (10; 30; 36; 40) gebildet ist, deren Lichtbündel in unterschiedliche Raumwinkel (Ω₁, Ω₂, Ω₃) abgestrahlt werden

6. Vorrichtung nach Anspruch 4, wobei die Lichtquelle mehrere Austrittsfenster (52) aufweist, die durch die Enden von Lichtleiterfasern (F₁,...Fₙ) gebildet sind.

7. Vorrichtung nach einem oder mehreren der Ansprüche 4 bis 6, wobei der Lichtempfänger ein Eintrittsfenster (54) auf weist, das an einem Ende einer Lichtleiterfaser (Fₙ₊₁) ausgebildet ist, aus deren anderen Enden das Licht auf ein lichtempfindliches Element (58) austritt.

8. Vorrichtung nach Anspruch 6 und 7, wobei das Austrittsfenster (52) und das Eintrittsfenster (54) der Lichtleiter (F₁, ...Fₙ₊₁) zur Positionserkennung einer in einem Kraftfahrzeug sitzenden Person (6) an einer Begrenzungsfläche des Fahrzeuginnenraums angeordnet sind.

9. Vorrichtung nach einem der Ansprüche 4 bis 8, wobei der Abstand zwischen Strahlungsempfänger (8) und Strahlungsquelle (4) klein ist im Vergleich zum Abstand zwischen der Strahlungsquelle (4) und dem Objekt (6) oder der Person.

## Claims

1. Method for generating a position image of an object or person reflecting or scattering radiation, with which method a radiation source (4; 24) emits radiation pulses (L₁, L₂, L₃), the beam angles of which are so small that only a small surface area of the object or person is struck by each radiation pulse, at predefined solid angles (Ω₁, Ω₂, Ω₃) in a temporally predefined manner, a radiation receiver (8) having a single light-sensitive element, which is in a predefined spatial relationship with the radiation source (4), receives the radiation pulses (L₁, L₂, L₃) reflected or scattered by the object (6) or person, and a computer unit determines the transfer times from emission of the individual radiation pulses (L₁, L₂, L₃) to the arrival of the proportions of these reflected or scattered by the object (6) or person at the radiation receiver (8), and determines the position image as a function of the known spatial assignment between radiation source (4) and radiation receiver (8), the solid angles, at which the respective radiation pulses (L₁, L₂, L₃) are emitted and the transfer times.

2. Method according to Claim 1, whereby the radiation source is a light source (4).

3. Method according to Claim 1 or 2, whereby the radiation pulses (L₁, L₂, L₃) are emitted sequentially such that receipt of the reflected or scattered part of a radiation pulse is terminated before receipt of the reflected or scattered part of the next radiation pulse starts.

4. Device for generating a position image of an object (6) or person reflecting or scattering radiation, containing
a radiation source (4) for emitting radiation pulses (L₁, L₂, L₃), the beam angles of which are so small that only a small surface area of the object or person is struck by each radiation pulse, at a predefined solid angles (Ω₁, Ω₂, Ω₃),
a radiation receiver (8) having a single light-sensitive element and arranged in a predefined spatial relationship with the radiation source (4) for receiving the parts of the radiation pulses reflected or scattered by the object or person,
a control and evaluation device (14), which controls the radiation source (4) such that the transfer times of the individual radiation pulses can be determined from their emission to receipt and which calculates the position image as a function of the positions of the radiation source (4) and the radiation receiver (8), the solid angles, at which the respective radiation pulses are sent, and the transfer times.

5. Device according to Claim 4, whereby the radiation source (4; 24) is formed by an arrangement of light-emitting elements (10; 30; 36; 40), the light beams of which are emitted at different solid angles (Ω₁, Ω₂, Ω₃).

6. Device according to Claim 4, whereby the light source has a plurality of exit windows (52), which are formed by the ends of optical fibres (F₁, .... Fₙ).

7. Device according to one or more of Claims 4 to 6, whereby the light receiver has an entry window (54), which is configured at one end of the optical fibre (Fₙ₊₁), from the other end of which the light exits to strike a light-sensitive element (58).

8. Device according to Claim 6 and 7, whereby the exit window (52) and the entry window (54) of the optical fibres (F₁, .... Fₙ₊₁) are arranged on a boundary surface of the interior of the vehicle to identify the position of a person (6) sitting in a motor vehicle.

9. Device according to one of Claims 4 to 8, whereby the distance between the radiation receiver (8) and the radiation source (4) is small compared with the distance between the radiation source (4) and the object (6) or person.

## Revendications

1. Procédé pour produire une image de position d'un objet qui réfléchit un rayonnement ou diffuse un rayonnement ou d'une personne qui réfléchit un rayonnement ou diffuse un rayonnement, procédé dans lequel une source de rayonnement (4 ; 24) émet des impulsions de rayonnement (L₁, L₂, L₃) dont les angles d'ouverture sont suffisamment petits pour que seule une petite région de la surface de l'objet ou de la personne soit touchée par chaque impulsion de rayonnement et émet dans un angle solide prédéterminé (Ω₁, Ω₂, Ω₃) de manière prédéterminée temporellement, un récepteur de rayonnement (8) présentant un unique élément sensible à la lumière et se trouvant dans une relation spatiale prédéterminée par rapport à la source de rayonnement (4), qui reçoit les impulsions de rayonnement (L₁, L₂, L₃) qui sont réfléchies ou diffusées par l'objet (6) ou la personne, et un dispositif de calcul obtient les temps de propagation s'écoulant entre l'émission des impulsions de rayonnement individuelles (L₁, L₂, L₃) et l'incidence de leur partie réfléchie ou diffusée par l'objet (6) ou la personne sur le récepteur de rayonnement (8), et obtient l'image de position, en fonction de la disposition connue dans l'espace entre la source de rayonnement (4) et le récepteur de rayonnement (8), des angles solides dans lesquels les impulsions de rayonnement (L₁, L₂, L₃) distinctes sont émises et des temps de propagation.

2. Procédé selon la revendication 1, dans lequel la source de rayonnement est une source lumineuse (4).

3. Procédé selon la revendication 1 ou 2, dans lequel les impulsions de rayonnement (L₁, L₂, L₃) sont émises séquentiellement de telle manière que la réception de la partie réfléchie ou diffusée d'une impulsion de rayonnement soit terminée avant que commence la réception de la partie réfléchie ou diffusée de l'impulsion de rayonnement suivante.

4. Dispositif pour produire une image de position d'un objet (6) réfléchissant un rayonnement ou diffusant un rayonnement, ou d'une personne réfléchissant un rayonnement ou diffusant un rayonnement, qui comprend :
une source de rayonnement (4) pour émettre dans des angles solides prédéterminés (Ω₁, Ω₂ , Ω₃) des impulsions de rayonnement (L₁, L₂, L₃) dont les angles d'ouverture sont suffisamment petits pour que seule une petite zone de surface de l'objet ou de la personne soit frappée par chaque impulsion de rayonnement,
un récepteur de rayonnement (8) disposé dans une relation spatiale prédéterminée par rapport à la source de rayonnement (4) et qui présente un unique élément récepteur de lumière pour recevoir les parties des impulsions de rayonnement qui sont réfléchies ou diffusées par l'objet ou la personne,
un dispositif de commande et d'analyse (14) qui commande la source de rayonnement (4) de telle manière que les temps de propagation des impulsions de rayonnement individuelles depuis leur émission jusqu'à leur réception puissent être obtenus et qui calcule l'image de position en fonction des positions de la source de rayonnement (4) et du récepteur de rayonnement (8), des angles solides dans lesquels les impulsions de rayonnement individuelles sont émises et des temps de propagation.

5. Dispositif selon la revendication 4, dans lequel la source de rayonnement (4 ; 24) est formée d'un ensemble d'éléments émetteurs de lumière (10 ; 30 ; 36 ; 40) dont les faisceaux lumineux sont émis dans différents angles solides (Ω₁, Ω₂, Ω₃).

6. Dispositif selon la revendication 4, dans lequel la source lumineuse présente plusieurs fenêtres de sortie (52) qui sont formées par les extrémités de fibres optiques (F₁, ... Fₙ).

7. Dispositif selon une ou plusieurs des revendications 4 à 6, dans lequel le récepteur de lumière présente une fenêtre d'entrée (54) qui est formée à une extrémité d'une fibre optique (Fₙ₊₁) par l'autre extrémité de laquelle la lumière sort pour frapper un élément sensible à la lumière (58).

8. Dispositif selon la revendication 6 ou 7, dans laquelle la fenêtre de sortie (52) et la fenêtre d'entrée (54) des guides de lumière (F₁, ... Fₙ₊₁) destinées à la reconnaissance de la position d'une personne (6) assise dans un véhicule automobile sont disposées sur une surface de délimitation de l'habitacle du véhicule.

9. Dispositif selon une des revendications 4 à 8, dans lequel la distance entre le récepteur de rayonnement (8) et la source de rayonnement (4) est petite en comparaison de la distance entre la source de rayonnement (4) et l'objet (6) ou la personne.
